# EUROPEAN PATENT SPECIFICATION

(11) **EP 2 692 662 B1**
(45) Date of publication and mention of the grant of the patent: **27.07.2016**
(21) Application number: 12720300.8
(22) Date of filing: 30.03.2012
(51) Int. Cl.: B65D 85/804, A47J 31/06, A47J 31/36

(54) **CAPSULE AND DEVICE FOR PROCESSING OF SAID CAPSULE**
KAPSEL UND VORRICHTUNG ZUR VERARBEITUNG VON DIESER KAPSEL
CAPSULE ET DISPOSITIF DE TRAITEMENT DE CETTE CAPSULE

(30) Priority: 30.03.2011 PT 10559710
(43) Date of publication of application: 05.02.2014
(73) Proprietor: Novadelta-Comércio e Industria de Cafés, S.A., 1900-264 Lisboa (PT)
(72) Inventor: NABEIRO, Rui Miguel, P-7370-112 Campo Maior (PT); Freire Falcão Teles Caramelo, Daniel, 1400-701 Lisboa (PT)
(74) Representative: Miranda de Sousa, João Paulo Vaz
(86) International application number: PCT/PT2012/000010
(87) International publication number: WO 2012/134311

(56) References cited:
- EP-A1- 1 364 605
- EP-A1- 2 374 733
- WO-A1-02/081337
- WO-A1-2006/111807
- WO-A1-2008/132571
- WO-A1-2010/076698
- WO-A1-2010/137947
- WO-A1-2011/138405
- DE-A1-102010 030 988
- DE-A1-102010 048 421
- US-A1- 2010 154 644

## Description

### Field of the Invention

The present invention refers to the field of capsules for aromatic substances used in the preparation of beverages, and, in particular, to the field of capsules for obtaining beverages by extraction, by means of a pressurized fluid flowing across it, such as for example espresso coffee.

The present invention further refers to the field of the devices for preparing beverages, in particular by extraction, by means of a pressurized fluid flowing across capsules, such as for example espresso coffee machines and similar.

### Background of the Invention

There are several solutions known in the prior art relating to capsules pertaining to the aforementioned technical field, in general, and to the devices and means of respective opening, for crossing by a pressurized flow, in particular. The solution usually practiced relates to a certain form of rupture of a given construction material, for example a synthetic or metallic material, used in at least a certain zone of the capsule, thereby allowing the entry of the pressurized flow. The rupture of the construction material is usually carried out by mechanical means that, in isolated manner or jointly with the hydraulic pressure applied by the flow, perforate said construction material, or cause a rupture or continuity failure of a certain zone of the latter, previously weakened or provided with a material meant for continuity failure.

The US 2010/154644 A1 discloses a capsule pertaining to the aforementioned technical field and presenting at least two closing elements retained by means of a removable union in a respective zone suited to face the flow upstream and downstream, whereby said union can be removed by means of applying a certain actuation force thereupon.

Examples of capsules according to the technical field are disclosed in EP 1864917 A1, and WO 2008/116818 A1.

None of these forms of opening a capsule, offers neither a high process control upon the instant of opening, or operating conditions under which it occurs, or upon the resulting form or dimensions of the flow passage section. In fact, the solutions known in the prior art do not allow a replicable passage configuration and total passage area made available to the flow. These aspects determine to a great extent the crossing flow and have therefore a substantial impact upon the quality of the resulting beverage.

There is therefore a need to solve the problem of an opening of capsule for passage of the flow by other means than those relating to some form of rupture of a construction material, by simple means and a more reliable mechanism.

### Brief description of the Invention

The goal of the present invention is to make available a capsule presenting a bigger control upon the opening conditions of the capsule, in general, and of the opening moment, configuration and dimensions of the passage section, in particular, for the purpose of crossing of the, at least one, aromatic substance contained in the capsule by a pressurized flow of a processing fluid, such as for example hot water.

In the scope of the present invention, by "capsule" one should understand a recipient defining an interior volume for collecting an aromatic substance, presenting at least one zone oriented towards the flow upstream, configured for example in the form of a substantially cylindrical box, or in the form of a double plate, and produced in a substantially rigid material or substantially flexible, and substantially gas tight or not.

The aforementioned goal is solved according to a first aspect of the invention, by means of a capsule produced by at least one construction element that configures an interior volume and at least one exterior zone oriented towards at least the upstream flow, whereby it is provided at least one closing element retained, preferentially in a substantially airtight way, by means of at least one removable union in a respective element fixture of substantially corresponding cross section, at least in said zone oriented towards the upstream flow.

Moreover, the closing element is preferentially retained in such a way that it may be removed from said removable union by means of applying a given, in each case respective, actuation force, preferentially exerted from the outside, directly upon said closing element, and eventually, at least in part, simultaneously with a retention force exerted in opposite direction to said actuation force, upon at least the remaining zone facing the upstream flow and/ or the downstream flow. The dimension of this actuation force is preferentially defined as a function of the type of removable union, of the construction materials and/or dimensions of the closing element and remanding zone facing upstream and/ or downstream flow. According to this first inventive aspect, the closing element is thereby removed from a respective element fixture in such a way that it is substantially surrounded by the pressurized flow.

According to the present invention, the configuration of the element fixture of each closing element, thus precisely defines the flow passageway section through the capsule, while the type of removable union allows reliably controlling the moment of opening thereof. Moreover, the body of the closing element thereby works as diffusing element of the pressurized flow, notably in the interior of the capsule, generating a recirculation zone on its side facing the upstream flow that reflects itself advantageously in the downstream distribution. In this sense, some embodiments of the closing element demonstrate as particularly advantageous, notably as a function of their location in the capsule and driving mechanism.

According to a preferred embodiment of the invention, the capsule according to the invention thus presents a closing element, preferentially disposed substantially centred relative to the cross section of the capsule. Alternatively, the capsule presents a plurality of closing elements, eventually disposed asymmetrically in relation to respective cross section of the capsule.

According to another preferred embodiment, the closing element is retained by means of two or more removable unions, provided and to be removed preferentially in a sequential way, by means of applying one, in each case respective, actuation force upon the closing element and/or retention force upon at least part of the remanding zone facing upstream and/or downstream flow.

Another goal of the present invention is to provide advantageous solutions, simple in constructive terms and favourable in terms of cost, for the reliable and effective closing of the capsule, specially in terms of its fixation, integrity and, preferentially, substantial airtight condition. Another related goal is of that way avoiding the use of thin films, notably metallic, applied over the zone facing the upstream and/or downstream flow, without constraining the maintenance of airtight conditions previously to an opening.

The aforementioned goal is solved according to another inventive aspect, in such a way that the retention of the, at least one, closing element, is carried out by means of in each case at least one union by means of friction and/or by means of positive locking in at least one respective element fixture, preferentially configured with a format substantially corresponding to that of the closing element.

In this particular, the closing element is retained in a corresponding element fixture by means of at least one friction union, i.e., substantially provided as a result of the friction force between directly adjacent elements, or similar force, and/or by means of positive locking, carried out by means of engagement between elements provided with a substantially matching form. These forms of retention are carried out by means of introducing the closing element, preferentially under a previously defined pressure, at least partially inside one, at least one, corresponding element fixture. In a preferred embodiment, the closing element and/or respective element fixture, preferentially present a substantially cylindrical format. It becomes particularly advantageous when the closing element presents an at least approximately conic or arched profile along its longitudinal direction parallel to the prevailing flow direction.

According to another preferred embodiment, the union by positive locking is carried out by at least one projection, that engages inside a corresponding cavity, both being provided in a side face of the closing element and/or element fixture, respectively. In a particular embodiment, the locking projection is provided in at least one level, preferentially configured symmetrical, more preferentially along the entire perimeter, of the side face of the closing element and/or respective element fixture.

According to another preferred embodiment, the closing element is retained by means of sitting in a corresponding element fixture, preferentially carried out by means of a corresponding step in the closing element that sits upon a part of the element fixture, preferentially upon a denting provided in the latter.

According to another preferred embodiment, the projection or locking step in union by positive locking are configured in such a way that they result substantially flexible, in particular when submitted to deflection, at least in a peripheral zone thereof.

According to another preferred embodiment, the closing element presents a tubular configuration along at least part of its longitudinal extension. Alternatively, the closing element advantageously presents a substantially circular ring configuration.

According to another preferred embodiment, the closing element is produced in two parts disposed in direct interaction in such a way that, by means of applying an actuation force, at least one of these parts is displaced, thereby releasing a flow passageway section. In a particular embodiment, the two parts are configured and interact in such a way with each other that they are displaced along a the prevailing fluid flow direction and/or along a transversal direction, thereby releasing at least part of the element fixture as flow passageway through the zone facing the flow upstream and/or downstream.

According to another preferred embodiment, the closing element extends at least over a substantial part of the distance between the zone of the capsule facing the flow upstream and the zone facing the flow downstream.

According to another preferred embodiment, the closing element presents a transverse dimension that is in each case approximately equal, preferentially slightly superior to the transverse dimension of the corresponding element fixture disposed on said zone facing the flow upstream and/or downstream.

According to another preferred embodiment, the closing element presents a different height from the height of the corresponding element fixture. On the other hand, the height of the closing element is preferentially previously dimensioned in such a way that the displacement of the closing element completely out of the element fixture, requires applying at least a certain actuation force at least during a certain period of time.

According to another preferred embodiment, the closing element is produced in a different material, preferentially less rigid than the material of the respective element fixture in which it is retained, particularly preferentially in a biodegradable material.

A further goal of the present invention is to make available a device for processing of a capsule according to the present invention, under conditions of high degree of efficiency and control upon the conditions in general, and upon the moment of opening and configuration of the section of passageway of the capsule, in particular.

This goal is solved according to the invention by means of a device, for processing at least one capsule according to the invention, comprising at least one fluid injection and/or at least one infusion discharge, configured and dimensioned in such a way that, at least during part of a respective movement towards a position of extraction, they apply such an actuation force upon a respective closing element and/or such a retention force upon at least part of the zone facing the flow upstream and/or downstream, respectively, that the combination thereof results equal or superior to the actuation force necessary to remove the, at least one, removable union of the closing element. In particular, according to a preferred embodiment, the combination of these forces is sufficient to release at least one flow passageway section, through a respective element fixture.

According to another inventive aspect of the present invention, the fluid injection and/or infusion discharge present a cross section that substantially corresponds, at least in this form and outside dimension, to the interior cross section of the closing element retained in the zone facing the flow upstream and/or downstream, respectively, so that it allows an engagement in positive fitting between respective parts.

According to a preferred embodiment, the fluid injection presents at least one injection bore disposed preferentially asymmetrically in relation to respective cross section, so as to direct the flow along a given direction inside the capsule.

According to a preferred embodiment, the pressurized fluid flow injected inside the capsule, exerts a given hydraulic force through the fluid injection and/or an hydraulic force is generated from the interior of the capsule according to the invention, preferentially directly upon a respective closing element.

According to another preferred embodiment of the device according to the invention, the mechanical force applied is, together with the hydraulic force, equal or superior to the actuation force necessary to release the closing element from a respective, at least one, removable union with the zone facing the flow upstream and/or downstream, preferentially to release at least one respective flow passageway section.

### Description of the Figures

The invention shall now be explained in more detail based upon preferred embodiments thereof and on the Figures attached.

The Figures correspond to merely schematic representations and show:
- Figures 1a - 1b:: views of two embodiments of a recipient according to the invention, of the type capsule (1) and pod (1'), respectively, both including a closing element (5) disposed in the capsule zone (2) facing the flow upstream;
- Figures 2a - 2c:: views of a first set of embodiments of a capsule according to the invention, including one closing element (5) represented in each case in a closing position;
- Figures 3a - 3c:: views of a second set of embodiments of a capsule (1) according to the invention, including one closing element (5) represented in each case retained in a closing position;
- Figures 4a - 4b:: views along the cut plane AA identified in Figure 1, of a capsule according to the invention, including one closing element (5) retained in a removable manner by means of a friction locking;
- Figures 5a - 5b:: views along the cut plane AA identified in Figure 1, of a capsule according to the invention, including one closing element (5) retained in a removable manner by means of a positive locking;
- Figures 6a - 6k:: views in schematic cut of several embodiments of the configuration of the closing element and respective retention, represented in each case in the closing and opening position in a capsule according to the invention;
- Figures 7a - 7c:: views in cut of a first embodiment of a device (10) according to the invention, for use in a capsule (1, 1') according to the invention, in the positions of closed and open capsule, in two possible forms of opening, respectively;
- Figures 8a - 8b:: schematic views of embodiments of the engagement of the fluid injection (11) with a capsule (1, 1') in a extraction device (10) according to the invention.

### Detailed description of the Invention

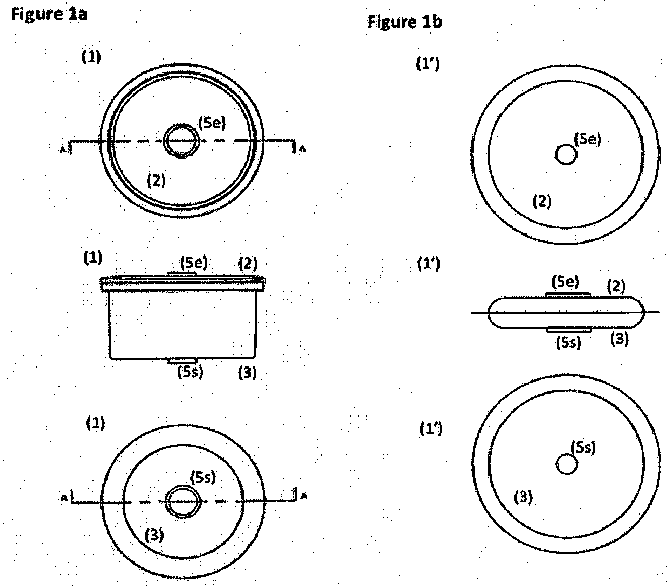

Figures 1a and 1b present outside views of two recipients according to the invention, provided in one embodiment of the capsule type (1) - Figure 1a - and one of the pod type (1') - Figure 1b -, including top view, side view and bottom view (successively from top to bottom of the drawing).

Both capsules (1, 1') are built by at least one construction element, defining at least one capsule zone (2) facing the flow upstream and, preferentially, also a capsule zone (3) facing the flow downstream. Each embodiment of the capsule (1, 1') according to the invention is provided, as an example, with one closing element (5e) in the zone (2) facing upstream and another (5s) in the zone (3) facing downstream, retained in a removable manner in a respective element fixture (6e, 6s), and disposed in each case centred relatively to the cross section of the capsule (1, 1'). The element fixture (6e, 6s) is in this case designed as a crossing overture of the construction element that defines the capsule zone (2, 3) facing the flow upstream and/or downstream, respectively. Alternatively, the capsule (1, 1') de according to the invention could also present only one closing element (5) in the zone (2) facing upstream, or more than one closing element (5) in each zone (2, 3) facing upstream/ downstream, disposed symmetrically or not, relatively to the central symmetry axis of the latter. Moreover, the closing element (5) could have at least approximately the dimension of the zone (2, 3) facing the flow upstream/ downstream.

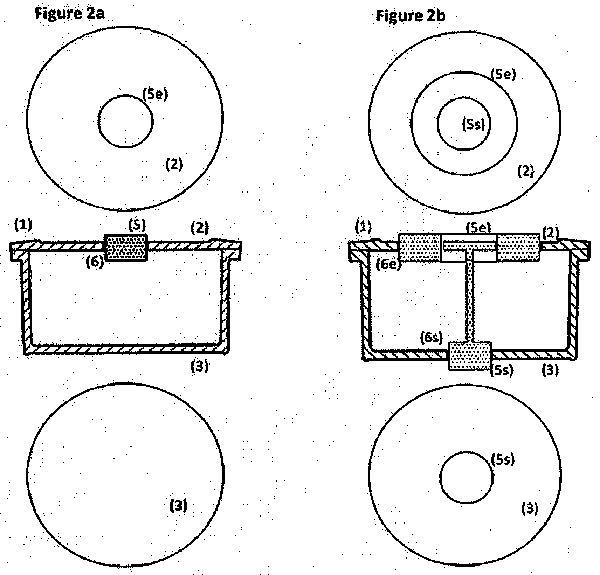

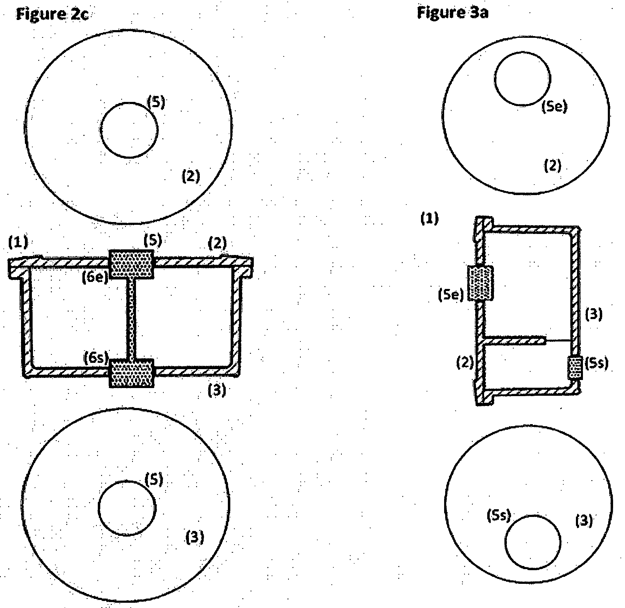

Figures 2a - 2c and 3a - 3c illustrate embodiments of the closing element in a capsule (1, 1') according to the invention.

Figures 2a and 2c show, successively from top to bottom, a top view, a view in cut (along the cut plane AA indicated in Figures 1a and 1b) and a bottom view, of a first set of embodiments of a capsule (1, 1') according to the invention. In a first example (Figure 2a), it is provided only one closing element (5) in the zone (2) facing upstream, whereby the flow exit is carried out by other means (not represented). I Figure 2b, the closing element (5e) on the side facing upstream (entry of the capsule) is provided in form of a ring and disposed in such a way that it engages in the closing element (5s) disposed on the side facing downstream (exit of the capsule) and provided as a sort of piston. In Figure 2c, the closing element (5e, 5s) is provided in the form of a single piece that simultaneously carries out the closing and opening of the sides facing upstream and downstream.

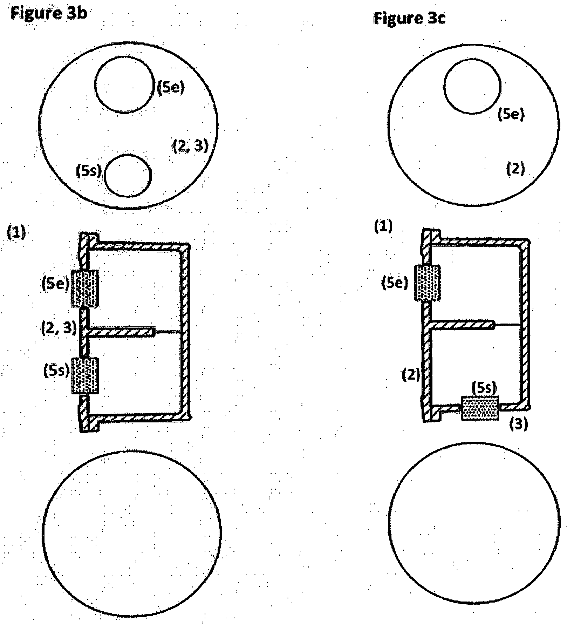

Figures 3a and 3c show, in views corresponding to those of Figures 2a to 2c, a second set of embodiments of capsules (1, 1') according to the invention, this time designed to be used in a certain position, for example toppled over one of the sides so that the flow crosses the capsule along a substantially horizontal direction. Figure 3a represents an embodiment in which the closing element (5e) upstream is provided in a non-centred manner, in a higher position relatively to closing element (5s) downstream, this way inducing a different flow pattern inside the capsule (1, 1'). In the case of. Figure 3b, both closing elements (5e, 5s) are provided over a same side of the capsule, while in case of Figure 3c, they are provided in substantially adjacent sides, or zones of capsule.

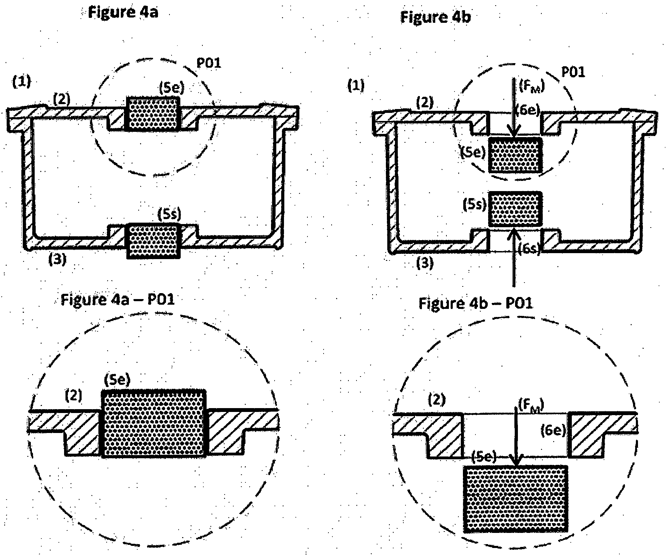

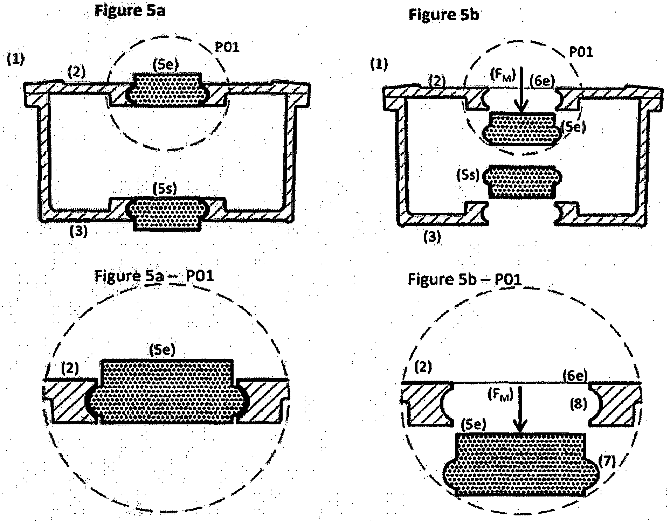

Figures 4a - 4b and 5a - 5b illustrate embodiments of removable retention of the closing element in a capsule (1, 1') according to the invention.

Figures 4a and 4b show an embodiment of the capsule (1, 1') according to the invention, in which the closing element (5) is retained by means of a friction union, represented in the initial position of retention and in a next position removed from said retention, respectively. The closing element (5) is preferentially disposed under pressure in a respective element fixture, so as to ensure airtightness conditions of the capsule (1, 1'). In this sense, the form, dimension and fitting pressure of the closing element (5) in a respective cavity (6), are previously dimensioned, according to the type of material used, so that the retention is reliably removed by means of applying a certain actuation force (F) applied from the outside upon the closing element (5) (see details 01).

Figures 5a and 5b show another embodiment of a capsule (1, 1') according to the invention, again in the retention position and removed therefrom, in which the closing element (5) is retained in a removable manner by means of a positive locking union in the element fixture (6e, 6s). For this purpose, the closing element (5) presents a protuberance zone (7), or a projection (7), that engages in a corresponding cavity (8) provided in the element fixture (6e, 6s)- see detail 01. The projection (7) is preferentially disposed symmetrically in at least one level along the perimeter of the side face of the closing element (5e, 5s), and directly engaging in a corresponding cavity (8) provided in the side face of the corresponding element fixture (6e, 6s).

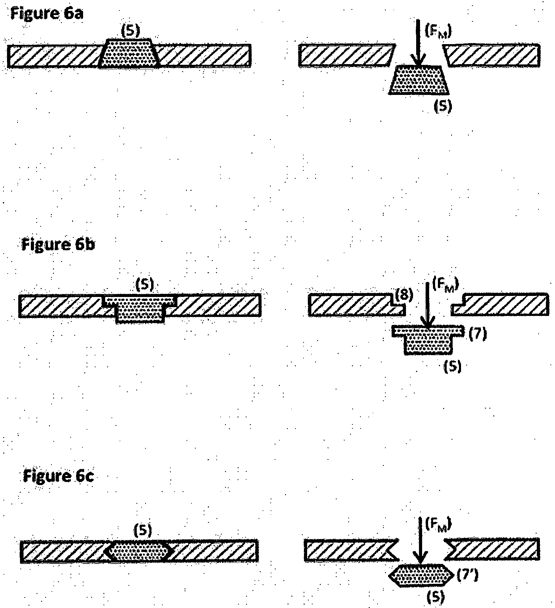

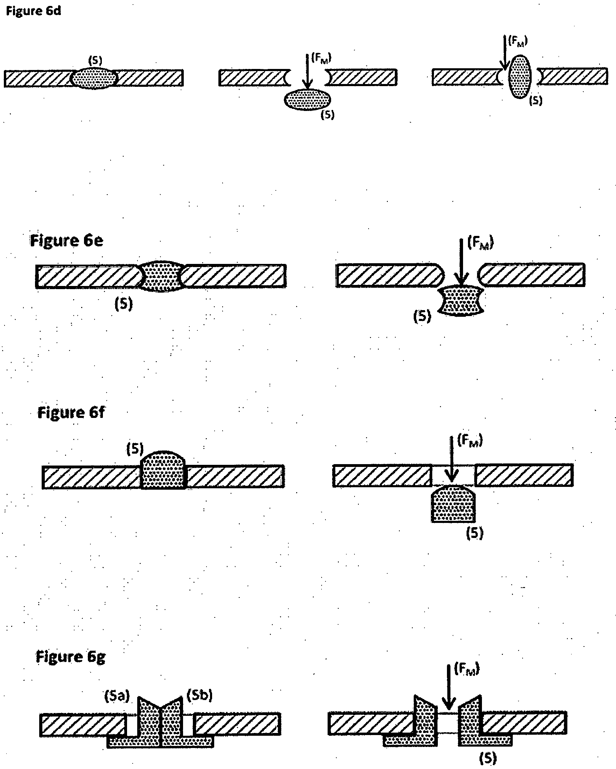

Figures 6a to 6k show schematic representations of particular embodiments of the closing element (5) and respective removable retention in a capsule (1, 1') according to the invention, in each case in a first closing position (A) and in a second open position (B). In the represented cases, the configuration of the closing element (5) and respective element fixture (6) shall lead to a certain combination of retention in friction union with retention in positive locking. Thus, the first type of retention shall be dominant in certain cases (Figures 6a and 6f), whereas the second shall be dominant in other (Figures 6b to 6e). In the case of the embodiment represented in Figure 6b, the closing element (5) is retained by means of an element in form of a step (7) that initially sits in a respective denting (8) provided in the element fixture (6), whereas in the case of the embodiment represented in Figure 6c, the positive locking is produced by means of a projection (7') provided in the closing element (5), that engages in a corresponding cavity (8) provided in the wall of the element fixture (6). In Figure 6d, there is a configuration of the closing element (5) in which the removal may be carried out by means of applying a force substantially parallel to the flow direction, eventually non-centred relatively to the closing element.

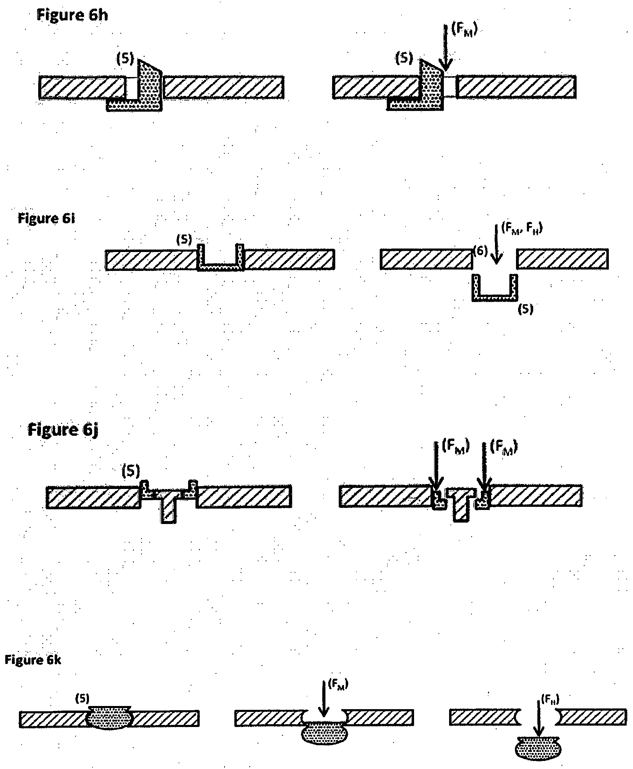

Figures 6e to 6h illustrate particular embodiments of the configuration and forms of retention and removal of the closing element (5), in which the latter projects itself above the plane defined by the respective zone (2, 3) facing upstream/ downstream. In the case of the forms represented in the Figures 6e and 6f, the closing elements (5) are retained under pressure and removed by means of applying on actuation force (F_{M}) with a dimension and/or duration such that displaces them completely out of a respective element fixture (6). In the case of the embodiments of Figures 6g and 6h, the closing element (5) presents a configuration so as to interact advantageously with a respective element on the side of the extraction chamber, or of the beverage preparation machine. In the case of the embodiments 6g and 6h, there are further closing elements (5) that are displaced by means of applying a mechanical actuation force (F_{M}), not along the main flow direction, but rather sideways, that way un-obstructing a certain passageway configuration for the flow.

In all previous embodiments, the closing element (5) is configured as a substantially massive body, which leads to the pressurized fluid flow to develop around it once removed from a respective blocking retention of passageway. Alternatively, as illustrated by way of example by Figures 6i and 6j, the closing element (5) may be configured as a substantially tubular body, at least along part of its longitudinal extension.

Figure 6k represents a particularly preferred embodiment of a closing element (5) according to the invention, in which the latter presents two removable retention positions in a respective element fixture (6) provided in the zone (2, 3) upstream and/or downstream, thereby giving rise to the release of a respective flow passageway section in two successive moments, by means of applying two respective actuation forces (F). Thus, said closing element (5) presents a first retention, designed for example as positive locking union (drawing in the centre) to be removed by means of a certain first actuation force (Fₘ), notably mechanic, and a second retention, to be removed by means of a certain complementary actuation force (F_{H}), notably hydraulic. In particular, the second element may be configured and produced so as to present a lower resistance, requiring a lower actuation force to remove a respective retention with the surrounding construction element.

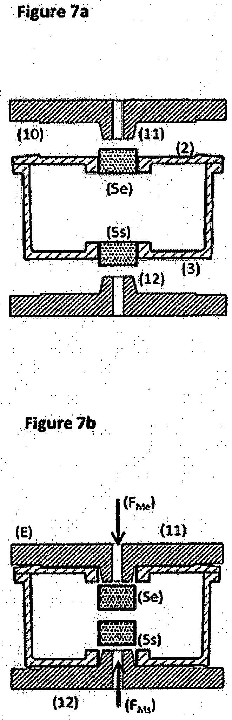

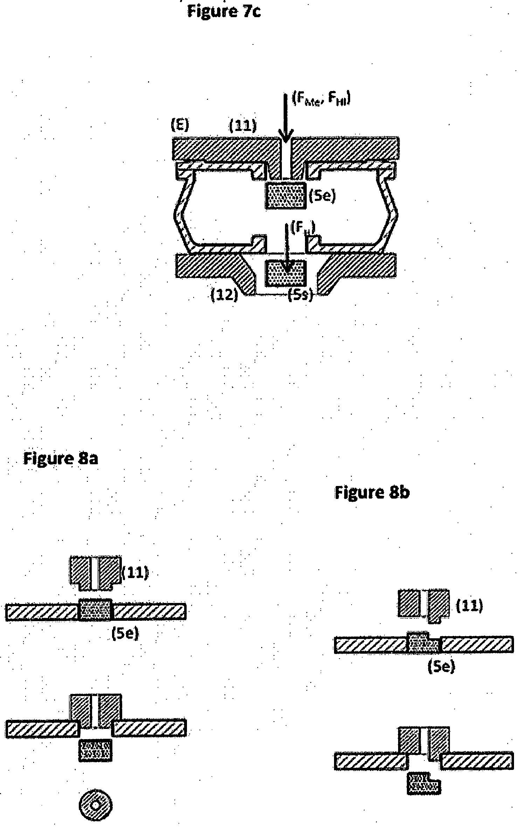

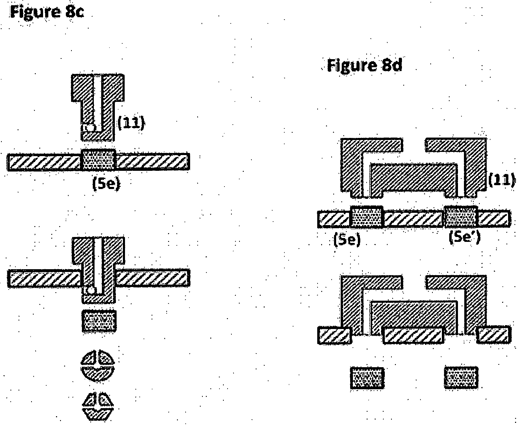

Figures 7a - 7c and 8a - 8d illustrate embodiments of the extraction device (10) of a capsule (1, 1') according to the invention.

Figures 7a to 7c are representations in cut of the device (10), configured as an infusion chamber, for processing of a capsule (1, 1') according to the invention by means of its crossing by a pressurized fluid, for example hot water. For motive of simplifying the drawing, there are only schematically represented the parts of the infusion chamber (10) de that directly interact with the capsule (1, 1'). Figure 7a corresponds to an initial instant in which the capsule (1, 1') has been inserted in the infusion chamber (10), while Figure 7b corresponds to a later instant in which the capsule (1, 1') has been fixed in the extraction chamber (E) by means of mechanical clamping between a fluid injection (11) and an infusion discharge (12). Figure 7c corresponds to an embodiment in which the closing element (5s) in the zone (3) facing downstream, is removed by means of the mechanical retention force applied upon the capsule, eventually so as to deflect the side walls thereof, and thus expel the closing element (5s) along the prevailing flow direction.

Thus, as illustrated in Figure 7b, when in a extraction position (E), a fluid injection (11) results aligned with one, in each case respective, closing element (5e) retained in the zone (2) facing upstream, and an infusion discharge (12), results aligned with another, in each case respective, closing element (5s) retained in the zone (3) facing downstream. According to a preferred embodiment, said fluid injection (11) is configured as a protuberance that, with the movement towards the extraction position (E), exerts a certain mechanical pressure force (F_{Me}) upon a respective closing element (5e). Analogously, also said infusion discharge (12) may be configured so as to exert a localized pressure force (F_{Me}), preferentially directly upon a respective closing element (5s). The mechanical pressure force (F_{Me}) is previously dimensioned in such a way that it results equal or superior to the actuation force (F) necessary for the closing element (5e) to be completely removed from a respective element fixture (6e), and thus releases the passageway for the processing fluid. The same principle may be applied in the case of the closing element (5s) disposed on the side of the capsule facing the flow downstream, by means of an actuation force (F), of equal or different value to the one relative to other closing element (5e). This configuration of actuation of the opening of entry of the pressurized flow inside the capsule (1, 1') has the advantage of representing a minimum pressure loss in the flow.

Moreover, the pressurized fluid flow injected by means of the fluid injection (11) exerts a hydraulic pressure force (F_{H1}), upon a respective closing element (5e). Thus, in another preferred embodiment of the device (10) according to the invention, the closing element (5e) is only removed from a respective element fixture (6e), by means of joint action of the mechanical pressure force (F_{Me}) and hydraulic pressure force (F_{H1}), jointly superior to the actuation force (F) necessary for the purpose. The same principle may be applied in the case of the closing element (5s) disposed on the side of the capsule facing the flow downstream.

Figures 8a to 8d illustrate different embodiments of the interaction between a fluid injection (11) and a respective closing element (5e), so as to optimize the conditions of application of an actuation force (F) upon the latter and resulting opening of the capsule (1, 1'), represented in each case in the instant previous to (top view) and following (bottom view) said opening. In the case of Figure 8a, the fluid injection (11) is configured, at least in the part that engages with the closing element (5e), with a substantially circular cross section, whose exterior diameter substantially corresponds to the diameter of the closing element (and somewhat smaller than that of a respective element fixture (6e)). Alternatively, the fluid injection (11) may present an asymmetric element of bigger extension, at least in said engagement part, so as to engage with a particular part of said closing element (5e). According to a preferred embodiment of the present invention (Figure 8c), the fluid injection (11) presents an asymmetric distribution of respective flow passage openings, so as to introduce the latter along a certain distribution pattern inside the capsule (1, 1'). The fluid injection (11) may also present a cross section, for example of hexagonal shape, substantially corresponding to that of the closing element (5) or respective element fixture (6), so as to better transmit the mechanical actuation force (F_{M}). According to another embodiment, the extraction device (10) may present more than one fluid injection (11), each of which in engagement with a respective closing fixture (5e, 5e').

## Claims

1. Capsule (1, 1') containing at least one aromatic substance for producing a beverage by means of its crossing by a pressurized fluid flow, built by at least one construction element including a zone (2) suitable to face at least a pressurized fluid flow upstream, whereby said zone (2) presents at least one closing element (5) retained in a respective element fixture (6) of substantially corresponding cross section, by means of a removable union which can be removed to liberate said element fixture (6) so as to form a flow passageway, **characterized in that** said retention of the, at least one, closing element (5e, 5s) in at least one respective element fixture (6e, 6s), is carried out by means of at least one protuberance (7), or locking element of the male type, provided in a side face of the closing element (5e, 5s), that locks together with a corresponding cavity (8), or locking element of the female type (8), provided in a side face of the element fixture (6e, 6s) and/or by means of at least one protuberance, or locking element of the male type, provided in a side face of the element fixture (6e, 6s), that locks together with a corresponding cavity, or locking element of the female type, provided in a side face of the closing element (5e, 5s).

2. Capsule according to claim 1, **characterized in that** each closing element (5) can be removed from the removable union by means of applying a certain actuation force (F) and/or a retention force, preferentially directly upon the respective closing element (5), so that it is substantially surrounded by the pressurized flow.

3. Capsule according to claim 2, **characterized in that** said capsule is provided with at least two closing elements (5e, 5s) disposed preferentially in respective zones (2, 3) suitable to face the flow upstream and downstream, respectively.

4. Capsule according to any of claims 1 to 3, **characterized in that** at least one closing element (5) is retained in a respective element fixture (6) by means of two removable unions which can be removed sequentially, preferentially along the flow direction, by means of applying respectively one actuation force (F) upon each union.

5. Capsule according to any of claims 1 to 4, **characterized in that** the step (7), or protuberance (7'), is configured as substantially flexible, in particular to deflection, more preferentially at least in a respective peripheral zone.

6. Capsule according to any of claims 1 to 5, **characterized in that** the closing element (5) is provided in two element parts (5a, 5b) in interaction with each other, these element parts (5a, 5b) being able to be displaced by means of applying at least one actuation force (F), preferentially along the flow prevailing direction, so as to release at least one flow passageway through zones (2, 3) suitable to face the flow upstream or downstream.

7. Capsule according to any of previous claims 1 to 6, **characterized in that** the closing element (5) is produced in a different material, preferentially less rigid, than the material of the element fixture (6) in which it is retained, particularly preferentially in a biodegradable material.

8. Device (10) suitable for the extraction of a beverage, including a capsule (1, 1') according to any of the claims 1 to 7, and comprising at least one fluid injection (11) and/or at least one infusion discharge (12), **characterized in that** the fluid injection (11) and/or the infusion discharge (12) is configured and dimensioned in such a way as to be able to exert a mechanical actuation force (F_{Me}, F_{Ms}) upon one respective closing element (5e, 5s) and/or a mechanical retention force upon at least part of the zones (2, 3) suitable to face the flow upstream or downstream, in such a way that the combination of these results can be equal or superior to the actuation force (F) necessary to remove at least one respective removable union from the respective closing element (5e, 5s).

9. Device according to claim 8, **characterized in that** the combination of forces and period of application thereof can be sufficient to displace the closing element (5e, 5s) along an extension such that it can be released at least one flow passageway section through the zones (2, 3) suitable to face the flow upstream or downstream.

10. Device according to claims 8 or 9, **characterized in that** the format or dimension of the cross section of the fluid injection (11) and/or of the fluid discharge (12) can correspond substantially to the format and dimension of the respective closing element (5e, 5s).

11. Device according to claims 8 to 10, **characterized in that** the fluid injection (12) is dimensioned at least in its extension, and provided with such a distribution of passageways over its perimeter, so as to generate a previously defined initial distribution, preferentially radially asymmetrical, of the fluid flow inside the capsule (1, 1').

12. Device according to any of claims 8 to 11, **characterized in that** the mechanical force (F_{Me}, F_{Ms}) can be, together with the hydraulic force, equal or superior to the actuation force (F) necessary to release the closing element (5e, 5s) from the, at least one, removable union with the zones (2, 3) suitable to face the flow upstream or downstream, preferentially to release at least one respective flow passage section.

## Patentansprüche

1. Kapsel (1, 1') enthältend mindestens eine aromatische Substanz zur Herstellung eines Getränks durch seine Überquerung durch eine unter Druck stehenden Flüssigkeitsduchflusses, der von mindestens einem Konstruktionselement hergestellt ist und mindestens ein Bereich (2) beinhaltet, der geeignet ist, mindestens stromaufwärts zuzuwenden, wobei genannter Bereich (2) stellt mindestens ein Schließungselement (5) dar, das in einem entsprechenden Befestigungselement (6) eines wesentlich entsprechenden Kreuzbereiches einbehält, durch eine bewegliche Verbindung, die bewegt werden kann, um genannten Befestigungselement (6) zu befreien, um einen Durchfluß zu bilden, **dadurch gekennzeichnet dass** genannte Retention von mindestens einem Schließungselement (5e, 5s) in mindestens einem entsprechenden Befestigungselement (6e, 6s) durch mindestens einer Protuberanz (7), oder Sperrelements der männlichen Art, ausgestattet an einer Seite des Schließungselements (5e, 5s), das zusammen mit einem entsprechenden Hohlraum (8) sperrt, oder Sperrelements der weiblichen Art (8), ausgestattet an einer Seite des Befestigungselements (6e, 6s) und/oder durch mindestens einer Protuberanz, oder Sperrelements der männlichen Art, ausgestattet an einer Seite des Befestigungselements (6e, 6s), das zusammen mit einem entsprechenden Hohlraum sperrt, oder Sperrelements der weiblichen Art, ausgestattet an einer Seite des Schließungselements (5e, 5s) duchgeführt ist.

2. Kapsel nach Anspruch 1, **dadurch gekennzeichnet, dass** jedes Schließungselement (5) von der beweglichen Verbindung durch Anwendung einer gewissen Antriebskraft (F) und/ oder einer Haltkraft bewegt werden kann, vorzugsweise direkt über dem entsprechenden Schließungselements (5), so dass es wesentlich durch einem unter Druck gesetzten Flusses umgeben ist.

3. Kapsel nach Anspruch 2, **dadurch gekennzeichnet, dass** genannte Kapsel mit mindestens zwei Schließungselemente (5e, 5s) ausgestattet ist, die vorzugsweise in entsprechenden Bereiche (2, 3) verteilt und geeignet sind, stromaufwärts und stromabwärts entsprechend zuzuwenden.

4. Kapsel nach einer der Ansprüchen 1 bis 3, **dadurch gekennzeichnet, dass** mindestens ein Schließungselement (5) in einem entsprechenden Befestigungselement (6) durch zwei bewegliche Verbindungen einbehalten ist, die folgend bewegt werden können, vorzugsweise der Flussrichtung entlang, durch Anwendung einer entsprechenden Antriebskraft (F) über jeder Verbindung.

5. Kapsel nach einer der Ansprüchen 1 bis 4, **dadurch gekennzeichnet, dass** Schritt (7), oder Protuberanz (7'), als wesentlich flexibel, hauptsächlich zur Steuerung, vorzugsweise mindestens in einem entsprechenden peripheralen Bereich gestaltet ist.

6. Kapsel nach einer der Ansprüchen 1 bis 5, **dadurch gekennzeichnet, dass** das Schließungselement (5) in zwei Elementteile (5a, 5b) in Interaktion mit einander ausgestattet ist, wobei diese Elementteile (5a, 5b) durch Anwendung mindestens einer Antriebskraft (F) beweglich sind, vorzugsweise der durchsetzenden Flussrichtung entlang, um mindestens einen Durchfluss durch Bereiche (2, 3) geeignet stromaufwärts oder stromabwärts zu befreien.

7. Kapsel nach einer der vorigen Ansprüchen 1 bis 6, **dadurch gekennzeichnet, dass** das Schließungselement (5) aus einem unterschiedlichen Material hergestellt ist, vorzugsweise weniger hart als das Material des Befestigungselements (6), wo es einbehalten ist, hauptsächlich in einem biologisch abbaubaren Material.

8. Gerät (10) geeignet zur Gewinnung eines Getränks, beinhaltend eine Kapsel (1, 1') nach einer der Ansprüchen 1 bis 7 und umfassend mindestens eine Flüssigkeitsinjektion (11) und/oder mindestens eine Infusionsentladung (12), **dadurch gekennzeichnet, dass** die Konfiguration und Dimension der Flüssigkeitsinjektion (11) und/ oder der Flüssigkeitsentladung (12), so um eine mechanische Antriebskraft (F_{Me}, F_{Ms}) über ein entsprechendes Schließungselement (5e, 5s) und/ oder eine mechanische Haltkraft über mindestens eine Teil der Bereiche (2, 3) auszüben vorgesehen ist, die geeignet ist, stromaufwärts oder stromabwärts so zuzuwenden, dass die Kombination dieser Ergebnisse gleich oder höher als die Antriebskraft (F) sein kann, die notwendig ist, um mindestens eine entsprechend bewegliche Verbindung vom entsprechenden Schließungselement (5e, 5s) zu bewegen.

9. Gerät nach Anspruch 8, **dadurch gekennzeichnet, dass** die Kombination der Kräfte und Zeit der Anwendung derer genug ist, das Schließungselement (5e, 5s) einer Ausdehnung entlang so zu verschieben, dass mindestens ein Durchflussbereich durch Bereiche (2, 3) befreit werden kann, die geeignet sind, stromaufwärts und stromabwärts zuzuwenden.

10. Gerät nach Ansprüchen 8 oder 9, darfurch gekennzeichnet, dass die Form oder Dimension des Querschnittsbereichs der Flüssigkeitsinjektion (11) und/ oder Flüssigkeitsentladung (12) wesentlich mit der Form und Dimension dem entsprechenden Schließungselement (5e, 5s) übereinstimmen.

11. Gerät nach Ansprüchen 8 bis 10, **dadurch gekennzeichnet, dass** die Flüssigkeitsinjektion (12) mindestens in ihrer Ausdehnung dimensioniert und mit solch einer Verteilung der Durchflüsse über ihr Perimeter ausgestattet ist, so dass eine vorig definierte Initialverteilung erzeugt wird, vorzugsweise radial asymmetrisch, vom Durchfluss innerhalb der Kapsel (1, 1').

12. Gerät nach einer der Ansprüchen 8 bis 11, **dadurch gekennzeichnet, dass** die mechanische Kraft (F_{Me}, F_{Ms}) zusammen mit der hydraulischen Kraft gleich oder höher zur Antriebskraft (F) sein kann, die notwendig ist, um das Schließungselement (5e, 5s) von mindestens einer beweglichen Verbindung mit Bereichen (2, 3) zu befreien, die geeignet sind, stromaufwärts oder stromabwärts zuzuwenden, vorzugsweise um mindestens einen entsprechenden Durchflussbereich zu befreien.

## Revendications

1. Capsule (1,1') contenant au moins une substance aromatique afin de produire une boisson par le passage d'un débit de fluide sous pression, étant constituée d'au moins un élément de construction, y compris d'une zone (2) appropriée pour faire face à au moins un débit de fluide sous pression en amont, sachant que cette zone (2) présente au moins un élément de fermeture (5), maintenu par son élément de serrage (6) de la section transversale qui coïncide essentiellement, au moyen d'un raccordement amovible, lequel peut être retiré afin de libérer ledit élément de serrage (6), en vue de former un passage de fluide, **caractérisé par** ladite rétention d'au moins un élément de fermeture (5e, 5s), dans au moins un des éléments de serrage respectifs (6e, 6s) qui est effectué au moyen d'au moins une protubérance (7) ou d'un élément de type mâle, situé sur le côté face de l'élément de fermeture (5e, 5s), ce qui le referme sur une cavité qui lui correspond (8), ou un élément de fermeture de type femelle (8), situé sur le côté face de l'élément de serrage (6e, 6s) et/ou au moyen d'au moins une protubérance ou d'un élément de verrouillage de type mâle, situé sur le côté face de l'élément de serrage (6e, 6s), qui se referme sur une cavité lui correspondant, ou d'un élément de verrouillage de type femelle, situé sur le côté face de l'élément de fermeture 5e, 5s).

2. Capsule selon la revendication 1, **caractérisée par le fait que** chaque élément de fermeture (5) peut être retiré du raccordement amovible en appliquant une certaine force d'actionnement (F) et/ou une force de retenue, de préférence de manière directe sur l'élément de fermeture respectif (5), afin qu'il soit substantiellement entouré par le fluide sous pression.

3. Capsule selon la revendication 2, fournie avec au moins deux éléments de fermeture (5e, 5s) disposés de préférence dans les zones (2, 3), de manière appropriée en vue de faire face au débit/flux en amont et en aval, respectivement.

4. Capsule selon l'une quelconque des revendications 1 à 3, dans laquelle au moins un élément de fermeture (5) est maintenu au sein de son élément de serrage (6) au moyen de deux raccordements, qui peuvent être retirés de manière séquentielle, de préférence tout au long du sens/direction du débit, en appliquant une force d'actionnement(F) sur chaque raccordement.

5. Capsule selon l'une quelconque des revendications 1 à 4, **caractérisée par** le cran (7), ou protubérance (7'), configuré(e) comme substantiellement flexible, surtout à la déviation, et de préférence au moins dans la zone périphérique.

6. Capsule selon l'une quelconque des revendications 1 à 5, **caractérisée par le fait que** l'élément de fermeture (5) est fourni dans deux parties de l'élément (5a, 5b), interagissant entre eux ; ces parties de l'élément (5a, 5b) étant capable d'être déplacés au moyen de l'application d'au moins une force d'actionnement (F), de préférence le long de la direction/sens dominant(e) du flux/débit, en vue de libérer au moins un passage de débit à travers les zones (2, 3), adaptées pour faire face au débit en amont et en aval.

7. Capsule selon l'une quelconque des revendications précédentes 1 à 6, **caractérisée par le fait que** l'élément de fermeture (5) est constitué d'un matériau différent, de préférence moins rigide que le matériau utilisé dans l'élément de serrage (6), dans lequel il est retenu ; ce matériau est notamment et de préférence fait de matériaux biodégradables.

8. Dispositif (10) adapté à l'extraction de la boisson, incluant une capsule (1, 1') selon l'une quelconque des revendications 1 à 7 et comprenant au moins une injection de liquide (11) et/ou au moins une décharge d'infusion (12), **caractérisée par le fait que** l'injection de liquide (11) et/ou la décharge d'infusion (12) sont configurées et dimensionnées de telle sorte qu'elles sont capables d'exercer une force d'actionnement mécanique (F_{Me} F_{Ms}) sur l'un de leur élément de fermeture (5e, 5s) et/ou une force de retenue sur au moins une partie des zones (2, 3), adaptée pour faire face au débit en amont et en aval, de sorte que la combinaison de ces résultats peut être égale ou supérieure à la force d'actionnement (F) nécessaire afin de retirer au moins un de leur raccordement de leur élément de fermeture (5e, 5s).

9. Dispositif selon la revendication 8, **caractérisée par le fait que** la combinaison de forces et le moment de leur application peuvent être suffisants pour déplacer l'élément de fermeture (5e, 5s) le long d'une extension telle qu'une section de passage de débit peut être libérée à travers les zones (2, 3), de forme adaptée pour faire face au débit en amont et en aval.

10. Dispositif selon les revendications 8 ou 9 **caractérisé par le fait que** le format ou les dimensions de la section transversale de l'injection du liquide (11) et/ou de la décharge du liquide (12) peut correspondre substantiellement au format et aux dimensions de l'élément de fermeture respectif (5e, 5s).

11. Dispositif selon les revendications 8 à 10, **caractérisé par le fait que** l'injection du liquide (12) a au moins les dimensions de son extension et contient une distribution de passages comprise dans son périmètre afin de produire une distribution définie antérieurement, de préférence radiale et asymétrique, du débit de liquide à l'intérieur de la capsule (1, 1').

12. Dispositif selon l'une quelconque des revendications 8 à 11, **caractérisé par le fait que** la force mécanique (F_{Me} F_{Ms}) peut, à l'aide de la force hydraulique, être égale ou supérieure à la force d'actionnement (F), nécessaire afin de libérer l'élément de fermeture (5e, 5s) d'au moins un raccordement amovible, des zones (2, 3), adaptées pour faire face au débit en amont et en aval, de préférence afin de libérer au moins une section de passage du débit respectif.
